# EUROPEAN PATENT SPECIFICATION

(11) **EP 0 643 298 B1**
(45) Date of publication and mention of the grant of the patent: **18.11.1998**
(21) Application number: 94202639.4
(22) Date of filing: 13.09.1994
(51) Int. Cl.: G01N 27/26, B01F 1/00

(54) **Reagent dissolution in sensor systems**
Vorrichtung zur Auflösung von Reagenzien in einem Sensorsystem
Dispositif pour la dissolution des réactifs dans un système de capteurs

(30) Priority: 14.09.1993 GB 9318959
(43) Date of publication of application: 15.03.1995
(73) Proprietor: THE SECRETARY of STATE for DEFENCE in HER BRITANNIC MAJESTY'S GOVERNMENT, Farnborough, Hants GU14 6TD (GB)
(72) Inventor: Dobson, John Vincent, Hartlepool, Cleveland TS27 4SA (GB)
(74) Representative: Skelton, Stephen Richard

(56) References cited:
- EP-A- 0 529 155
- US-A- 3 504 376
- US-A- 4 522 923
- US-A- 4 740 475

## Description

The invention relates to the packaging or presentation of a reagent in a sensor system and, particularly, but not exclusively, a flow-through sensor system.

The determination of substances, additives or contaminants within a sample solution frequently requires conditioning the solution prior to the taking of any readings. The term reagent mentioned above is therefore meant to include ligand, salts and other species which affect the characteristics of a given sample. For example, it is known that where the presence of a metal ion is to be detected, the addition of a ligand which binds specifically with the ion to be detected, can increase the sensitivity of a sensor system by at least one order of magnitude. In addition, the use of the salt trisodium phosphate may be used as a reagent to buffer aqueous solutions to values of pH in excess of pH10. Thus the use of these and other reagents may be desirable in a sensor system.

One sensor system based upon well-known and well-established voltammetric techniques, Anodic Stripping Voltammetry (ASV), employs the use of such reagents. Hitherto, ASV has involved discrete sampling techniques. To analyse a sample solution, a single pre-determined volume of that sample solution is taken, pre-determined amounts of appropriate reagents are then added to provide a solution of known specification and a measurement is then taken. The disadvantage of this system is that it requires an operator to periodically, and often frequently, visit sites to collect samples before taking readings. This can be a costly and time consuming procedure, especially when the sites are in remote and/or hostile environments. However, the inventor has developed a flow-through ASV system whereby sampling can take place either continuously or at pre-determined intervals so as to determine at given instances in time the composition of a sample solution. This new technique is highly advantageous in that in enables operators to view dynamically the constituents of a sample and so observe variations in readings over a given time. Further, the system can be installed in a pre-determined location and, under suitable programming, left to perform a number pre-programmed operations.

However, there are significant difficulties associated with this flow-through system in that reagents may have to be continually added to the sample solution if recordings are to be taken. It follows therefore that for each given reagent the function of the system is limited to the dissolution properties of each reagent.

In developing the new flow-through system, a problem has been identified with the system. Namely, how to prolong the dissolution rate of any reagent.

Conventionally, salts of pre-selected reagents are formed into pellets which may be cylindrical or almond shaped. These pellets are then positioned within a sample stream and subject to dissolution over a period of time.

In very simple terms, in a basic flow-through system, to maintain the required minimum levels of reagent in solution, all that is necessary is a length of pipe or tubing and sufficient pellets provided therein to ensure that the required length of time of operation is achieved. If for example, a single pellet lasts for 10 minutes before it is spent, and the desired length of operation ofthe system is 60 minutes, then simple proportioning indicates that six pellets are required. However, disregarding the simple scaling-up used above it becomes very obvious that if the required operation time is 600 minutes (10 hours) then 60 pellets are required. Assuming each pellet is 10mm long, the total length of pipe required to hole the pellets is 0.6m. This therefore can become impractical from a consideration of unit size alone.

It therefore follows that there is a need to provide a suitable housing means for accommodating a pre-selected number of reagents.

The object of the present invention is to provide a way of packaging or presenting reagents in a flow through system so that the dissolution time is optimised and furthermore, to provide packaging with a view to enabling a flow-through system to operate for a substantial period of time.

According to the present invention, there is provided a reagent housing for use with flow through sampling systems comprising;
a hollow compartment having an inlet port and an outlet port;
a plurality of reagent containers sized and shaped to fit within the compartment; the containers comprising receptacle means having a releasable lid, the containers being able to be opened so that reagents can be placed therein; and each of the containers comprising an aperture, whereby fluid flowing through the hollow compartment can dissolve the reagents contained within the containers at a substantially constant rate.

The invention therefore solves the problem concerning prolonged dissolution by providing a simple housing for accommodating a number of reagent containers. The invention is particularly suitable for use with a flow through Anodic Stripping Voltammetry type system.

A surprising advantage to be gained from the invention lies in the fact that reagents do not need to be pelletized prior to being placed in the containers. Rather, the reagents can be used in powdered form and may, preferably, be compacted into the containers.

A suitable shape for the hollow compartment is that of a tube with the inlet and outlet ports being located at either end. For ease of design, the cross section of the tube can be circular. For simplicity, the reagent containers could also have the same shape as that of the cross section.

In a preferred embodiment of the invention a plurality of containers are placed linearly within the hollow compartment. In such circumstances and if the hollow compartment is tubular, it is preferable that the reagent containers are located so that they are parallel to the axis of the tube.

Each of the containers can contain a pre-selected reagent. In a practical situation, each reagent in each housing is different. The use of different reagents within different containers enables the detection of a number of different chemical species.

A sintered disk can be provided behind the aperture means so as to prevent the ingress and egress of material.

A further advantage associated with the invention is the lack of preparatory time needed to operate the invention. Essentially, reagents can be placed within the containers without requiring prior treatment or pelletization. This increases the efficiency with which the reagents can be used within a sensor system.

The benefits of using reagent materials housed in the various ways described above include the ease of replacement, which is important if the system is to be a portable system and the extension of operational life. The results of our experimental activities confirm that at sample flow rates much in excess of those typically experienced, pelletized reagents housed as described above maintain the required dissolution rates for periods well in excess of 8 hours, the period of 8 hours being seen as the likely operating time for a portable instrument. Further, an important consideration is that the reagents are contained in a safe and solid housing which prevents accidental spillage and contamination.

An embodiment of the invention will now be described by way of example only with reference to the accompanying drawing wherein:
Figure 1 represents a diagrammatic illustration of conventional reagent packaging techniques wherein: Figure 1A represents a first form of reagent packaging: Figure 1B represents a second form of reagent packaging; and Figure 1C represents a third form of reagent packaging;
Figure 2 represents a side sectional view of a tubular housing; and
Figure 3 represents a dissolution curve for apparatus in accordance with the invention.

Traditionally, pelletization technology recognised only two shapes of pellets, the almond shape, so-called because of its similarity to the almond, and the cylindrical or rod shape. When both types of pellets are positioned such that their longitudinal axes are parallel to the direction of fluid flow, the almond shaped pellets exhibit more turbulent flow regimes around their surface than the cylinder or rod shaped pellets. The creation of turbulence is not desirable because it increases the rate at which the pellet is eroded. Therefore, cylindrical pellets are produced in preference to the almond shaped pellets.

The process of manufacturing the pelletized reagent materials is carried out in a pellet dye and former. Manufacture of the reagent or ligand pellet is carried out by hand. The former is filled with the reagent to the required level. The dye is then lowered into the former by hydraulic action. A final forming pressure is applied before the dye is retracted and the pellet is removed from the former. The dimensions of a single pellet are variable according to requirements.

If preferred, an inert filler such as alumina or silica gel or an epoxy resin may be added to the reagent prior to compression.

Our experiments have shown that a 1.5 gram pellet without an inert filler took approximately 10 minutes to dissolve at a normal sample flow rate of 6.5 litres per hour. The addition of an inert filler such as alumina or silica gel marginally increased this dissolution time to under 15 minutes.

However, the addition of epoxy resin proved highly successful in that a 1.5 gram pellet dissolved steadily over a 24 hour period under normal sample flow rate of 6.5 litre per hour. Further, it was found that the ratio of resin to ligand was critical in controlling dissolutions and that ideally a ratio of 1 to 3, resin to ligand, was desirable. The malleability of the pellet initially produced, meant the hydraulic press could be used allowing the pellet to be shaped before hardening.

Further, we found that encasing the formed pellet in an insoluble and semi-permeable casing to reduce the area of pellet exposed to liquid and so decrease the dissolution rate was desirable.

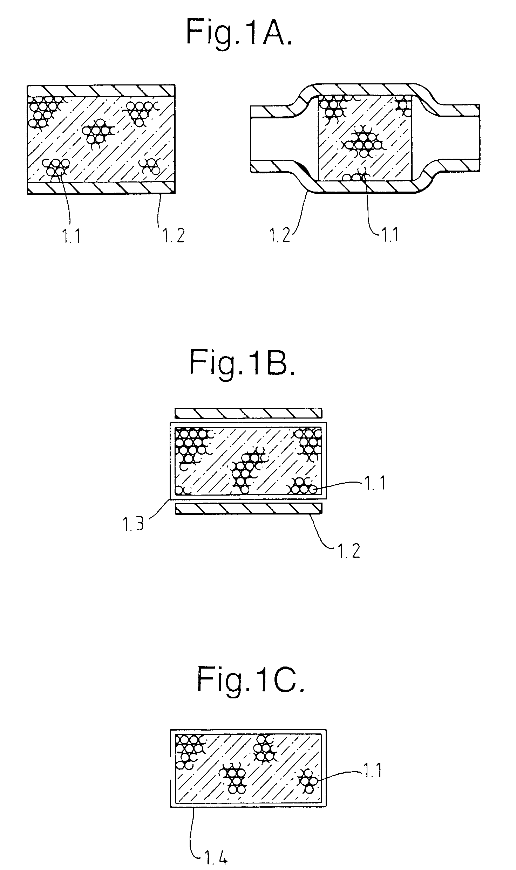

Figures 1A, 1B and 1C represent diagrammatic illustrations of conventional reagent packaging techniques. The reagent, 1.1 is in pellet form and is housed with a siliconised rubber casing, 1.2. The reagent can be further enclosed by a PTFE surround, 1.3. Alternatively, the reagent pellet can be housed within a paper surround, 1.4. For this type of packaging technique, the maximum dissolution time for a 1.5 gram pellet exposed to a flow rate of 6.5 litres per hour is 15.5 hours.

However, it will be appreciated that the provision of a reagent pellet involves, as explained above, a considerable amount of time and effort.

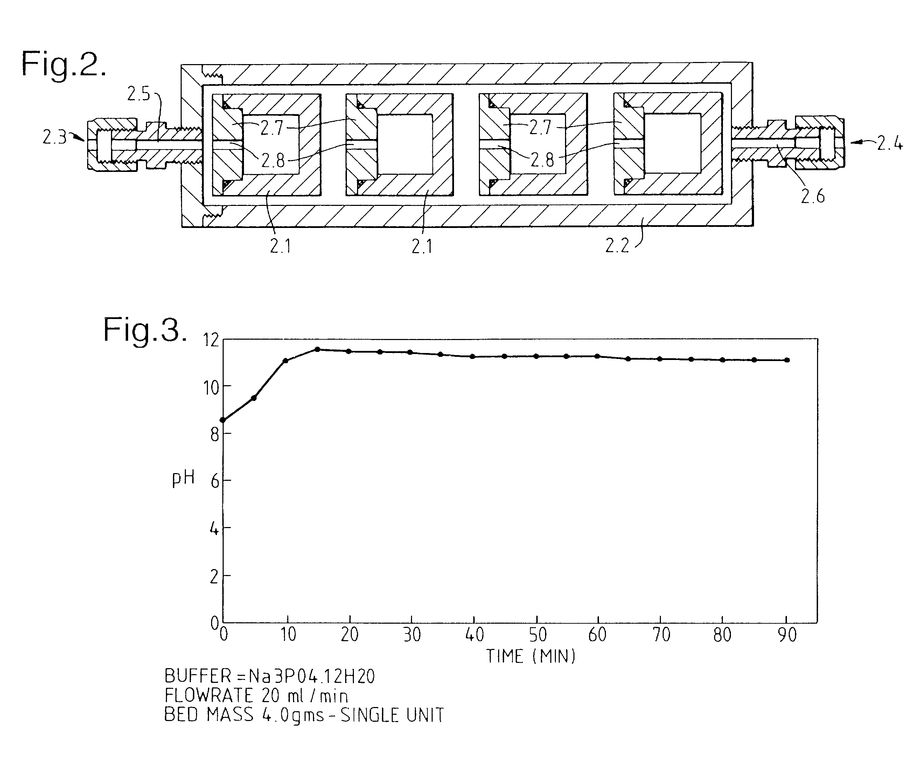

The inventor has therefore developed a means for accommodating a reagent which overcomes the need for this preparatory treatment and which has a desirable dissolution rate. The present invention is illustrated in Figure 2.

In this configuration, the reagent material is not pelletized but is compacted into small cylindrical housings 2.1 which are located in spaced and aligned relationship within a hollow compartment, 2.2. The hollow compartment, 2.2, comprises an outer tubular housing.

The hollow compartment 2.2 has a first inlet end 2.3 and a second outlet end 2.4. Ends 2.3 and 2.4 are provided with inlet chambers 2.5 and 2.6 respectively. The chambers 2.5 and 2.6 are screw threaded at the innermost ends so as to engage with the corresponding screw threaded apertures located in the outermost ends of the hollow compartment 2.2.

Reagent housings 2.1 comprise cylindrical pots having friction fit fitted lids 2.7 with central apertures 2.8 therethrough. The housings 2.1 can have a sintered disk located behind the apertures, 2.8, in order to prevent the ingress of any other material or the egress of any material within it.

In use, a plurality of reagent housings 2.1 are filled with pre-selected reagents and then positioned within the hollow compartment 2.2 in an upright orientation so that one pot sits on the lid of another pot. Fluid entering the hollow compartment 2.2 flows through inlet chamber 2.5 in and around the reagent housings 2.1. This causes the reagents to be added to the fluid. The fluid leaves the hollow compartment 2.2 via outlet chamber 2.6 in the end 2.4, the fluid having been fortified with reagent.

Figure 3 shows rate of dissolution of a pH reagent when housed in the apparatus of the invention. It can be seen that the dissolution curve is substantially flat thus indicating that, contrary to expectations, a non-pelletized reagent can be successfully housed in the apparatus in order to be dissolved at a constant rate.

The invention therefore provides for a means of housing a plurality of unprepared reagents so that the dissolution rate of same can be optimally controlled.

## Claims

1. A reagent housing for use with flow-through sampling systems comprising; a hollow compartment (2.2) having an inlet port (2.3) and an outlet port (2.4); a plurality of reagent containers (2.1) sized and shaped to fit within the compartment, the containers comprising receptacle means having a releasable lid (2.7), the containers being able to be opened so that reagents can be placed therein, and each of the containers comprising an aperture (2.8), whereby fluid flowing through the hollow compartment can dissolve the reagents contained within the containers at a substantially constant rate.

2. A reagent housing as claimed in claim 1, wherein the reagent containers are adapted to take the reagents in pellet form.

3. A reagent housing as claimed in claim 1, wherein the reagent containers are adapted to take the reagent in powdered form.

4. A reagent housing as claimed in claim 3, wherein the reagent containers are adapted so that the reagent can be compacted into them.

5. A reagent housing as claimed in any of the previous claims, wherein the hollow compartment is tubular in shape, the inlet port and outlet port being located in ends of the tube.

6. A reagent housing as claimed in claim 5, wherein the shape of the cross section of the hollow compartment is circular.

7. A reagent housing as claimed in either of claims 5 or 6, wherein the cross sectional shape of the reagent containers are approximately the same shape as that of the cross section of the hollow compartment.

8. A reagent housing as claimed in any of the previous claims, wherein the reagent containers are located linearly within the hollow compartment.

9. A reagent housing as claimed in any of the previous claims, wherein each of the reagent containers is adapted to contain a different pre-selected reagent.

10. A reagent housing as claimed in any of the previous claims, wherein the reagent containers further comprise a sintered disk located behind the aperture.

## Patentansprüche

1. Reagens-Gehäuse zur Verwendung mit Durchfluß-Probenahmesystemen, das enthält: einen Hohlraum (2.2), der eine Einlaßöffnung (2.3) und eine Auslaßöffnung (2.4) aufweist, mehrere Reagens-Behälter (2.1), die eine solche Größe und Form aufweisen, daß sie in den Hohlraum passen, wobei die Behälter eine Aufnahmeeinrichtung mit einen lösbaren Deckel (2.7) aufweisen und geöffnet werden können, so daß Reagentien darin untergebracht werden können, und jeder Behälter eine Öffnung (2.8) aufweist, wodurch ein durch den Hohlraum fließendes Fluid, die in den Behältern enthaltenen Reagentien in einer im wesentlichen konstanten Geschwindigkeit löst.

2. Reagens-Gehäuse nach Anspruch 1, wobei die Reagens-Behälter so ausgebildet sind, daß sie die Reagentien in Pelletform aufnehmen.

3. Reagens-Gehäuse nach Anspruch 1, wobei die Reagens-Behälter so ausgebildet sind, daß sie die Reagentien in Pulverform aufnehmen.

4. Reagens-Gehäuse nach Anspruch 1, wobei die Reagens-Behälter so ausgebildet sind, daß das Reagens darin kompaktiert werden kann.

5. Reagens-Gehäuse nach einem der vorhergehenden Ansprüche, wobei der Hohlraum eine Röhrenform aufweist und die Einlaßöffnung und Auslaßöffnung an den Enden des Rohrs angeordnet sind.

6. Reagens-Gehäuse nach Anspruch 5, wobei die Querschnittsform des Hohlraums kreisförmig ist.

7. Reagens-Gehäuse nach Anspruch 5 oder 6, wobei die Querschnittsform der Reagens-Behälters annähernd die gleiche wie die Querschnittsform des Hohlraums ist.

8. Reagens-Gehäuse nach einem der vorhergehenden Ansprüche, wobei die Reagens-Behälter innerhalb des Hohlraums linear angeordnet sind.

9. Reagens-Behälter nach einem der vorhergehenden Ansprüche, wobei jeder Reagens-Behälter so ausgebildet ist, daß er ein anderes, vorher gewähltes Reagens enthält.

10. Reagens-Behälter nach einem der vorhergehenden Ansprüche, wobei die Reagens-Behälter ferner eine gesinterte Scheibe enthalten, die hinter der Öffnung angeordnet ist.

## Revendications

1. Boîtier de réactif destiné à être utilisé avec des systèmes d'échantillonnage à circulation, comprenant :
un compartiment (2.2) ayant un canal d'entrée (2.3) et un canal de sortie (2.4), plusieurs récipients (2.1) de réactif dont la dimension et la configuration sont telles qu'ils se logent dans le compartiment, les récipients comprenant un dispositif réceptacle ayant un couvercle amovible (2.7), les récipients pouvant être ouverts afin que les réactifs puissent être placés à l'intérieur, et chaque récipient comprenant un orifice (2.8) tel que le fluide qui s'écoule dans le compartiment peut dissoudre les réactifs contenus dans les récipients avec une vitesse pratiquement constante.

2. Boîtier de réactif selon la revendication 1, dans lequel les récipients de réactif sont destinés à contenir les réactifs sous forme de pastilles.

3. Boîtier de réactif selon la revendication 1, dans lequel les récipients de réactif sont destinés à contenir le réactif sous forme de poudre.

4. Boîtier de réactif selon la revendication 3, dans lequel les récipients de réactif sont réalisés afin que le réactif puisse être comprimé dans les récipients.

5. Boîtier de réactif selon l'une quelconque des revendications précédentes, dans lequel le compartiment a une forme tubulaire, le canal d'entrée et le canal de sortie étant placés aux extrémités du tube.

6. Boîtier de réactif selon la revendication 5, dans lequel la forme de la section du compartiment est circulaire.

7. Boîtier de réactif selon la revendication 5 ou 6, dans lequel la forme de la section des récipients de réactif est à peu près la même que celle de la section du compartiment.

8. Boîtier de réactif selon l'une quelconque des revendications précédentes, dans lequel les récipients de réactif sont placés sous forme alignée à l'intérieur du compartiment.

9. Boîtier de réactif selon l'une quelconque des revendications précédentes, dans lequel chacun des récipients de réactif est destiné à contenir un réactif prédéterminé différent.

10. Boîtier de réactif selon l'une quelconque des revendications précédentes, dans lequel les récipients de réactif comportent en outre un disque fritté placé derrière l'orifice.
